Europäisches Patentamt

European Patent Office

Office européen des brevets

(19)

(11) EP 0 654 161 B1

(12) EUROPEAN PATENT SPECIFICATION

(45) Date of publication and mention
of the grant of the patent:
16.06.1999 Bulletin 1999/24

(21) Application number: 93916564.3

(22) Date of filing: 16.06.1993

(51) Int Cl.⁶: F04D 27/02

(86) International application number:
PCT/US93/05764

(87) International publication number:
WO 94/03862 (17.02.1994 Gazette 1994/05)

(54) **PROCESS AND DEVICE FOR MONITORING AND FOR CONTROLLING OF A COMPRESSOR**

VERFAHREN ZUR ÜBERWACHUNG UND STEUERUNG EINES VERDICHTERS UND
VORRICHTUNG HIERFÜR.

PROCEDE ET DISPOSITIF DE CONTROLE ET DE REGULATION D'UN COMPRESSEUR

(84) Designated Contracting States:
AT BE CH DE DK ES FR GB GR IE IT LI LU MC NL
SE

(30) Priority: 10.08.1992 EP 92113586

(43) Date of publication of application:
24.05.1995 Bulletin 1995/21

(73) Proprietor: DOW DEUTSCHLAND INC.
D-21677 Stade (DE)

(72) Inventors:
• WALTER, Hilger, A.
D-2160 Stade (DE)
• HÖNEN, Herwart
D-5132 Uebach-Palenberg (DE)
• GALLUS, Heinz, E.
D-5100 Aachen (DE)

(74) Representative:
Prechtel, Jörg, Dipl.-Phys. Dr. et al
Patentanwälte,
H. Weickmann, Dr. K. Fincke,
F.A. Weickmann, B. Huber,
Dr. H. Liska, Dr. J. Prechtel,
Dr. B. Böhm,
Postfach 86 08 20
81679 München (DE)

(56) References cited:
EP-A- 0 024 823          DE-A- 3 605 958
FR-A- 2 248 427          GB-A- 2 191 606
US-A- 3 963 367          US-A- 4 055 994
US-A- 4 196 472          US-A- 4 216 672
US-A- 4 252 498          US-A- 4 322 977
US-A- 4 422 125          US-A- 4 449 409
US-A- 4 457 179          US-A- 4 604 702
US-A- 4 618 856          US-A- 4 625 280
US-A- 4 989 159          US-A- 5 165 845

• PATENT ABSTRACTS OF JAPAN vol. 6, no. 228
(M-171) [1106], 13 November 1982 & JP 57
129297 A (HITACHI), 11 August 1982,
• GARNIER, V.H. : "Rotating Waves as a Stall
Inception Indication in Axial Compressors" THE
AMERICAN SOCIETY OF MECHANICAL
ENGINEERS, PAPER NO. 90-GT-156, 11 - 14 June
1990, NEW YORK, pages 1-12, XP002058443
• MATHIOUDAKIS: "Fast Response Wall Pressure
Measurement as a Means of Gas Turbine Blade
Fault Identification" THE AMERICAN SOCIETY
OF MECHANICAL ENGINEERS, PAPER NO.
90-GT-341, 11 - 14 June 1990, NEW YORK, pages
1-8, XP002058444

## Description

### FIELD OF THE INVENTION

The present invention relates to a process and a device for monitoring and controlling of a compressor, said compressor comprising a rotor and a housing, said rotor being rotatably mounted within said housing for rotation about a rotational axis with variable or constant rotational speed, said compressor further comprising at least one compressor stage, each of said at least one stages comprising a row of rotor blades mounted on said rotor and being arranged one following the other in a circumferential direction with respect to said rotational axis and of a row of stator blades mounted on said housing and being arranged one following the other in a circumferential direction with respect to said rotational axis.

The invention provides for an early detection and reporting of changes in blade-loading for either multi- or single-stage compressors with the possibility of being able to control the compressor in accordance with the reported changes. A compressor may be operated as an isolated unit (for example as large pump or process compressor in the chemical or petroleum industry) or in conjunction with a power-turbine engine, as would be the case in a power plant operation. The compressor may further be part of a gas turbine used for driving aeroplanes, ships or large vehicles. The compressor may be a radial type compressor or preferably an axial type compressor.

### BACKGROUND OF THE INVENTION

Compressors consist of a series of rotating or stationary blade rows in which the combination of a rotor (circular rotating blade row) and a stator (circular stationary blade row) forms one stage. Inside the rotor, kinetic energy is transferred to the gas flow (usually air) by the individual airfoil blades. In the following stator, this energy is manifested as a pressure rise in the gaseous air as a consequence of deceleration of the gaseous air flow. This deceleration of the gaseous air flow is induced as a result of the design of the stator section. The pressure ratio (exit pressure/inlet pressure) of a single stage is limited because of intrinsic aerodynamic factors, so several stages are connected together in many turbo compressors to achieve higher pressure ratios than could be achieved by a single stage.

The maximum achievable pressure ratio of a turbo compressor is established by the so-called stability limit of the compressor given by the characteristic of the compressor and the gaseous air flowing through the compressor at any time. As the pressure in the compressor increases, the aerodynamic loading on the compressor blades must also increase. At full speed operation of a multistage compressor, the rear stages carry the majority of the aerodynamic load (and attendant stress), and the stability limit is established by the limits inherent in the design of these stages. When operating at lower speeds, the stability limit of the compressor is established by limitations deriving from characteristics related to the front stages of the compressor.

In the normal stable working range of a compressor stage, axial flow of gaseous air through all of the vane channels between the compressor blades takes place equally and continuously as the air volume is transported through the channels. However, a compressor stage can also operate in a state known as an unstable working range. In this unstable working range, a stall condition can be present in the interaction between the air flow and the airfoil blades which can contribute to substantial variations in the internal pressure profile of the compressor. These pressure variations can, in turn, cause substantial stress to the blades of the compressor. Ultimately, this stress can damage the blades if the compressor continues to operate in the unstable working range for any length of time. Operation in the unstable working range is inefficient at best and potentially destructive; this mode of operation should be avoided as much as possible.

The development of a stall in a stage of the compressor proceeds from the interaction of individual airfoil blades with the gaseous air flowing through the vanes associated with those individual blades. Ideally, the gaseous air fluid flow should be axially continuous through the compressor; however, high blade loads can induce localized disruptions to that continuous flow.

The air fluid flow around each blade has an associated flow boundary layer which covers each blade and coheres to the blade. The flow boundary layer associated with a rotor blade will rotate as an associated entity of the blade as the blade itself rotates. At the downstream edge of each blade, this flow boundary layer melds into an associated flow boundary entity known as the "delve region or wake region" which is characterized by a localized reduction in both pressure and flow velocity. With increasing load, this wake region correspondingly will extend until a critical mass or size is achieved; when the wake region on the downstream edge of the blade achieves this critical size, it fractures or fragments into (1) a (new) smaller wake region which is still coherent with the blade and (2) a "flow boundary layer part" which physically separates from the wake region. Studies have indicated that these "flow boundary layer parts", separated from the rotor blades, move radially outwards from the axis of rotation due to centrifugal forces and collect at the inner circumferential surface of the compressor housing. This collection of separated flow boundary layer parts "swirls" and effectively establishes a turbulent fluid layer (or collection of swirled separated regions) at the inner surface of the housing; this turbulent fluid layer has associated stochastic pressure fluctuations which are useful in the present invention. For the purpose of this disclosure, this initial state associated with an increasing compressor loading will be termed as a "separated flow pre-stall".

With further increasing load, disrupted flow zones downstream of the blades expand in size and/or increase in number. Disruption of the continuous air flow through either groups of non-contiguous single-blade channels or whole sections of contiguous blade channels may occur. This blockage may be characterized as a sort of "bubble- like" entity which, in general, moves circumferentially throughout the stage with a rotational speed up to 0.5 times the rotor frequency. This phenomenon is known as "rotating stall". In stages with large blade heights, only the radially outer part of the blade channels is blocked and this situation is known as a "part span stall". With increasing load, the entire set of blade channels in a stage can be effectively blocked, resulting in an event and condition known as a "full span stall". In case of compressor stages having small overall diameters, "full span stall" can occur directly without transition through "part span stall" status.

Another phenomenon, which may derive from rotating stall or also may occur suddenly with increased blade loading, is the "compressor surge". In this state, the whole circumference of one stage (usually the last one) has stalled (full span stall in the full blading). Then, the compressor cannot work any longer against the back- pressure of this one stage and the flow in the compressor breaks down. The high pressure gas flows back from the outlet to the compressor intake until the pressure at the compressor outlet is reduced enough so that a moderate blade load allows normal working again. When the back pressure is not reduced, this changing operation will be continued. These fluctuations will take place with very low frequencies (typically a few Hertz) and will destroy the compressor within a short time ofoperation because the rotor is respectively shifted axially fore and aft. Furthermore, the compressor surge will be accompanied by fluctuations in the continuous overall air flow to the firing chamber in case of a gas turbine; these fluctuations can disrupt the environment in the firing chamber of the turbine in such a manner as to extinguish the "flame" in the firing chamber or (in some rare instances) establish the prerequisite environment for a backfire of the turbine through the compressor. A compressor should not be operated under such conditions; at best, operation will be inefficient for those stages wherein stall effects occur.

On the other hand, it is desirable to operate a compressor in an optimally efficient manner (that is as close as possible to the appropriate maximum obtainable mass flow rate given by the overall status of the compressor). Contemporary turbo engines are usually equipped with fuel or energy control systems which measure and output a variety of operating parameters for the overall engine. Included in such control systems are highly accurate pressure sensing devices or systems. For example, pressure measuring systems are described in US Patent No. 4,322,977 entitled "Pressure Measuring System", filed May 27, 1980 in the names of Robert C. Sell, et al.; US Patent No. 4, 434,664 issued March 6, 1984, entitled "Pressure Ratio Measurement System", in the names of Frank J. Antonazzi, et al.; US Patent No. 4,422,335 issued December 27, 1983, entitled "Pressure Transducer" to Ohnesorge, et al.; US Patent No. 4,449,409, issued May 22, 1984, entitled "Pressure Measurement System With A Constant Settlement Time", in the name of Frank J. Antonazzi; US Patent No. 4,457,179, issued July 3, 1984, entitled "Differential Pressure Measuring System", in the names of Frank J. Antonazzi, et al.; and US Patent No. 4,422,125, issued December 20, 1983, entitled "Pressure Transducer With An Invariable Reference Capacitor", in the names of Frank J. Antonazzi, et al.

US Patent 4,216,672 to Henry et al, discloses an apparatus for detecting and indicating the occurrence of a gas turbine engine stall which operated by sensing sudden changes in a selected engine pressure. A visual indication is also provided.

US Patent 4,055,994 to Roslyng et al discloses a method and a device of detecting the stall condition of an axial flow fan or compressor. The method and device measure the pressure difference between the total air pressure acting in a direction opposite to the direction of the revolution of the fan wheel and a reference pressure corresponding to the static pressure at the wall of a duct in substantially the same radial plane.

US Patent 4,618,856 to Frank J. Antonazzi discloses a detector for measuring pressure and detecting a pressure surge in the compressor of a turbine engine. The detector is incorporated in an analog to a digital pressure measuring system which includes a capacitive sensing capacitor and a substantially invariable reference capacitor.

While a wide variety of pressure measuring devices can be used in conjunction with the present invention, the disclosures of the above-identified patents and the articles mentioned next are hereby expressly incorporated by reference herein for a full and complete understanding of the operation of the invention.

The article "Rotating Waves as a Stall Inception Indication in Axial Compressors" of V.H. Garnier, A. H. Epstein, E.M. Greitzer as presented at the "Gas Turbine and Aeroengine Congress and Exposition" from June 11 to 14, 1990, Brussels, Belgium, ASME Paper No. 90-GT-156, discloses the observation of rotating stall. In case of a low speed compressor, the axial velocity of air flow is measured by several hot wire anemometers distributed around the circumference of the compressor. From the respective sensor signals, complex Fourier coefficients are calculated, which coefficients contain detailed information on the wave position and amplitude as a function of time of a wave traveling along the circumference of the compressor. These traveling waves are to be identified with rotating stall waves. In case of a high speed compressor, several wall mounted, high- response, static pressure transducers are employed, from which sensor signals first and second Fourier coefficients are being derived. However, this direct spectral approach does not directly yield information on compressor stability, since the height of the rotating stall wave peak is a function of both the damping of the system and the amplitude of the excitation. To estimate the wave damping, a damping model is fitted to the data for an early time estimate of the damping factor. By this technique, a rather short warning time may be available (in the region of tens to hundreds of rotor revolutions) to take corrective action (changing the fuel flow, nozzle area, vane settings etc.) to avoid compressor surge.

In the article "Fast Response Wall Pressure Measurement as a Means of Gas Turbine Blade Fault Identification" of K. Mathioudakis, A. Papathanasious, E. Loukis and L. Papailiou, as presented at the "Gas Turbine and Aeroengine Congress and Exposition" at Brussels, Belgium, from June 11-14, 1990, ASME Paper No. 90-GT-341, it is mentioned that rotating stall is accompanied by the appearance of distinct waveforms in the measured pressure, corresponding to a rotational speed which is a fraction of the shaft rotational speed.

The systems known in the art cannot detect an unstable operating condition based on the preliminary indications of instability. They can only detect well established unstable conditions in an advanced state and, therefore, must avoid operation in the region where damage could result to the compressor from the more subtle kinds of instability. In order to avoid operation in the region where damage could result to the compressor, prior art compressor control systems operate with a high safety margin; this margin is well below the maximum possible mass flow rate of the compressor. In effect, the prior art compressor must therefore operate in a less efficient and a less economical mode than be realized with the subject of this invention.

Furthermore, the prior art control systems can detect an existing tendency of the compressor towards a stall condition or a surge condition only at a very short time before the actual occurrence of stall or surge. In many cases there is not enough time left after the above detection to take corrective actions for avoiding stall or surge.

The reduction of the risk of compressor stall and compressor surge is a further reason for the prior art compressor control systems to operate with the high safety margin.

SUMMARY OF THE INVENTION

It is an object of the present invention to provide a process for monitoring of an axial compressor which is sensitive in detecting small changes in the flow conditions of the axial compressor near the maximum mass flow rate.

It is a further object of the invention to provide a process for monitoring of an axial compressor which provides for an early warning of a compressor stall.

Another object of the invention is to provide a process for monitoring of an axial compressor allowing an online monitoring with fast response, using common calculation techniques for the signal evaluation.

One or more of these objects are solved by the process according to the invention, said process comprising the following steps:

a) measuring of pressure fluctuations within at least one of said compressor stages in the region of said housing by means of at least one pressure sensing device, each device delivering a sensor signal, respectively;
b) deriving a frequency signal from each of said sensor signals, said frequency signal comprising a set of a plurality of frequency components of each of said respective sensor signals in a respective frequency interval wherein each frequency signal is indicative of the amplitudes of each of the frequency components of said respective sensor signals within the respective frequency interval;
c) checking whether at least one frequency component in at least one of said frequency signals further comprises at least one characteristic peak in a region of a characteristic frequency assigned to one of said compressor stages, said characteristic frequency being defined as the product of said rotational speed and the blade number of the rotor blades of the respective compressor stage;
d) determining at least one peak parameter indicative of the form of said characteristic peaks;
e) generating a status change signal indicative of a change of operational status of said compressor in case of said peak parameter having a value lying beyond a determined value range.

According to the invention the characteristic peak is observed. This peak is sensitive to changes in the flow conditions near the maximum available mass flow rate. When the compressor is operating in a status characterized by a substantial distance from the maximum flow rate the wake regions of the rotating blades passing the pressure sensing device produce a pressure variation at that sensing device with the characteristic frequency. The frequency signal derived from the respective sensor signal shows a respective characteristic peak the form of which is defined by respective peak parameters (peak height, peak width or the like). It has been found that, with increasing load approaching the mentioned maximum mass flow rate for the respective rotor frequency, the characteristic peak becomes more distinct (increasing height and/or increasing width) which may be attributed to the wake regions increasing with load. However, with further increasing load a decreasing characteristic peak is observed. This phenomenon is due to the separation of the region of the flow boundary layer in the area of the downstream edge of each blade into fragments called "flow boundary layer parts", these boundary layer parts being collected at the inner circumferential surface of the compressor, constituting a relatively thick layer with stochastic fluctuations. The pressure sensing device sensing the pressure fluctuations of this layer at the inner circumferential surface of the compressor delivers a sensor signal with increasing amount of background noise component and reduced periodic part component. Thus, in the above mentioned separated flow pre-stall condition, the characteristic peak decreases and in general vanishes since the stochastic fluctuating layer at the inner circumference of the compressor increases and shields the pressure sensing device against the periodic pressure fluctuations due to the rotating wake regions of the rotating blades. In the pre-stall status there is essentially no blockage of the stage. Only with further increasing load the pre-stall status evolves into a stall status (rotating stall; part span stall; full span stall; compressor surge).

It can be demonstrated that, when using a conventional gas turbine (such as General Electric LM 5000) as part of a power plant, the first signs of a compressor full stall leading to a later shut down of a gas turbine can be identified by observing the characteristic peak more than half an hour before the actual shut down. Within this context, the invention provides for an early warning of a stall condition so that appropriate measures to avoid engine stall can be undertaken.

The frequency signal may easily be derived from the detector signals by using common evaluation techniques, for example fast Fourier transformation (FFT) or fast Hartley transformation (FHT). No model calculations are necessary.

The pressure fluctuations due to the wake regions of the rotating blades can best be measured by said pressure sensing device being arranged at said housing between the rotor blades and the stator blades of the respective compressor stage.

The frequency may be obtained by fast Fourier transformation, the respective electronic transformation units being readily obtainable. For the process according to the invention only the time varying part of the absolute pressure is of interest. These pressure fluctuations may be directly measured by means of a piezoelectric, a piezo- resistive pressure sensor or especially a piezocapacitive pressure sensor. Another less preferred pressure sensing device is a strain gauge pressure sensor.

The peak parameter indicative of the form of the characteristic peak may be the peak height or the peak width. In both cases, the parameter is easy to determine and easy to be compared with a limit value or with the limits of an allowed region.

In order to enhance the accuracy and/or to reduce the evaluation efforts, the frequency interval in which the frequency signal has to be evaluated, is determined to have a reduced width of less than 4000 Hz. A preferred width is 2000 Hz so that the frequency signal has to be determined only between the characteristic frequency minus 1000 Hz and the characteristic frequency plus 1000 Hz.

It was found out that the observation of two characteristic peaks assigned to two different stages of the compressor enhances the sensitivity of the monitoring process. At high compressor rotational speed the load of the stages increases in the down stream direction, that is that stage nearest to the high pressure axial end of the compressor is subjected to the highest load at high speed. When the compressor is driven in a region near the maximum possible load, the last stage usually is in the separation flow pre-stall condition, so that the corresponding characteristic peak is very small or is hidden by the background signal. Depending on the actual fluid flow status of the compressor, the characteristic peak in next to the last stage may decrease with increasing load in contrast to the second to the last stage in which the characteristic peak may rise with load. This is due to the growing tendency of separation in the next to the last stage and the increase of the wake regions in the second to the last stage. Thus, the form of the characteristic peak in the mentioned two stages is in opposite direction such that also small changes in the fluid flow status can be detected.

Preferably said peak parameter is defined as a rated sum of individual peak parameters of each of said at least two different characteristic peaks, said individual peak parameters being determined by the peak shape of the respective characteristic peak. In this way, only one parameter is to be observed.

In case of the above described three compressor stages with opposite dependency of the characteristic peak in the next to the last and second to the last stage, this rated sum may be defined as the sum of the reciprocal of the peak height of the characteristic peak assigned to the last pressure stage, the reciprocal of the peak height of the characteristic peak assigned to the next to the last pressure stage and the peak height of the characteristic peak assigned to the second to the last pressure stage.

When the compressor is operating well below its maximum rotational speed, the pressure fluctuations in the front stages can be observed in the described way (observing the changes of the form of the respective characteristic peak) in order to determine the status of the system. For lower speeds and high load the mentioned separation and stall effects are primarily observed in the front stages. How- ever, the full speed mode of the compressor, in most of the cases, is more important due to the better economical performance.

The frequency signal derived form the sensor signal of a single sensor generally exhibits not only the characteristic peak of the stage in the pressure sensing device as located, but also the characteristic peaks of upstream- located stages due to the movement of the pressure waves through the compressor. However, the amplitude of the characteristic peak decreases with distance to the pressure sensing device so that in some cases it is more advantageous to use a separate pressure sensing device for each stage (and characteristic peak) which is of interest. In both cases, the characteristic peaks of measuring stages may be easily differentiated since, in general, the number of rotor blades and thus the characteristic frequency is different.

The invention relates further to a process for controlling of an axial compressor, which is based on the above des- cribed process for monitoring of an axial compressor with the additional feature that a status change signal, derived from said process, is used for controlling said axial compressor. Depending on the special construction of the compressor and on the operational parameters, especially the rotational speed of the compressor, at least one of the stages (in general the last stage at the high-pressure end of the compressor) is in the separation flow pre-stall status (with the compressor being driven at maximum efficiency, that is near the upper limit of its mass flow rate).

When the actual performance of the compressor changes in a direction away from the maximum possible mass flow rate, the separation effect decreases and is accompanied by a corresponding increase of the characteristic peak for a specific stage. This increase may be used as an input for controlling the axial compressor in a way to increase the compressor load. In a similar manner, a decrease of the characteristic peak may be used for controlling the axial compressor in a way to decrease the compressor load. With increasing load, the characteristic peak in the second to the last stage first increases with a growth of the wake regions and then decreases with the beginning of the flow separation (pre-stall status). The monitoring of this tendency may serve as a basis for control of the compressor in the sense of avoiding an overload of the compressor, that is to avoid compressor stall or compressor surge and avoiding to operate the compressor in an uneconomic way too far below the optimum mass flow rate.

To facilitate the simultaneous observation of changes of several characteristic peaks, it is preferred to define a peak parameter as a rated sum of individual peak parameters of each of said characteristic peaks.

The invention further relates to a device for monitoring of an axial compressor in accordance with the above- described process for the monitoring of an axial compressor. The invention also relates to a device for controlling an axial compressor in accordance with the above mentioned process for controlling an axial processor.

BRIEF DESCRIPTION OF THE DRAWINGS

For a better understanding of the invention, reference is made to the following description and the drawings.

Figure 1            is a simplified graphic representation of an axial compressor as part of a gas turbine showing the location of dynamic pressure probes;

Figure 2            is a schematic representation of the compressor of Figure 1 illustrating the three final compressor stages at the high-pressure end of the compressor;

Figure 3            is a block diagram of the dynamic pressure probes connected to an evaluation unit;

Figure 4            illustrates a frequency signal with a characteristic peak;

Figures 5a,b,c,     show three successive forms of the characteristic peak of Figure 4 obtained by increasing the load starting with Figure 5a;

Figure 6            is a table for demonstrating the dependency of the form of the characteristic peaks of the three last stages on load.

DESCRIPTION OF THE PREFERRED EMBODIMENT

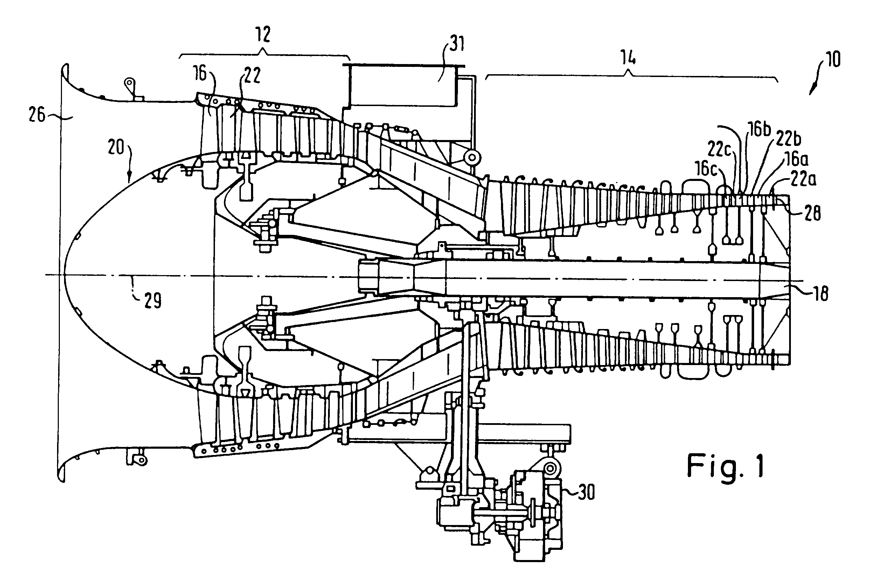

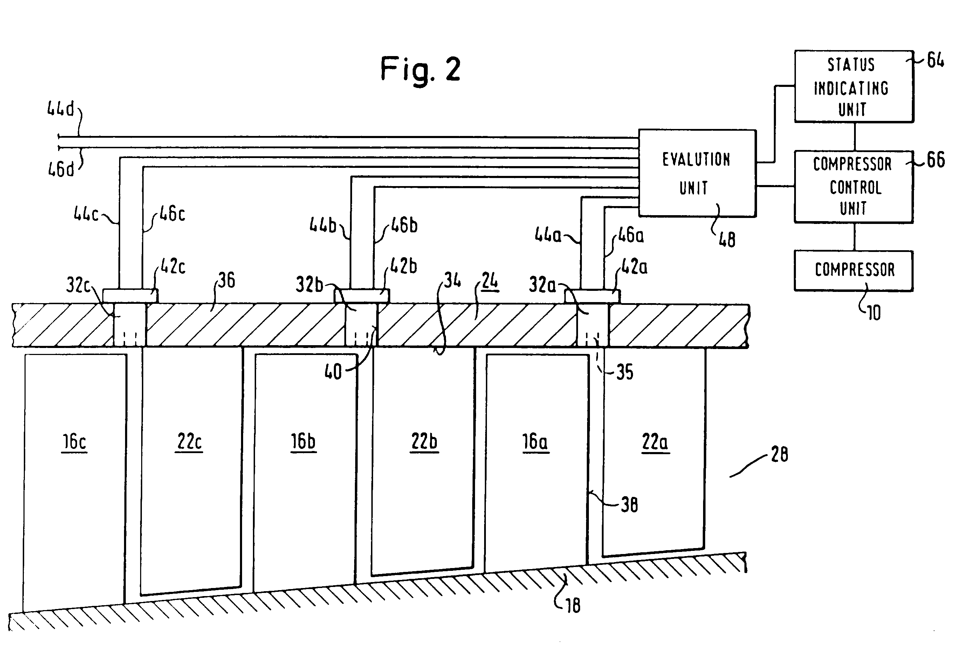

Referring to the drawings, wherein equal numerals correspond to equal elements throughout, first reference is made to Figures 1 and 2 wherein a typical compressor part of a gas turbine engine is depicted (including the present invention). The compressor 10 is comprised of a low pressure part 12 and a high pressure part 14. Rotor blades 16 of the compressor are mounted on a shaft 18 of a rotor 20. Stator blades 22 (guide vanes) are mounted in a housing (casing) 24 of said compressor 10 and are therefore stationary. Air enters at an inlet 26 of the gas turbine engine and is transported axially to compressor stages of the compressor under increasing pressure to an outlet 28. An axis 30 of said compressor is defined as the axis of rotation of the rotor 20. Although not shown, the present invention may also be employed in connection with a radial type compressor.

Each of the mentioned compressor stages consists of two rows of blades with equal blade number, namely a row of rotor blades 16 and a row of stator blades 22. The blades of each row are arranged one following the other in a circumferential direction with respect to said axis 30. Figure 2 shows the last stage of the compressor at its outlet 28 (high pressure axial end of the compressor) with rotor blades 16a and stator blades 22a. Also, the second- last and the third last compressor stages are depicted with rotor blades 16b and stator blades 22b and rotor blades 16c and stator blades 22c, respectively.

The compressor 10, according to Figure 1, comprises an accessory gear box 30 enabling the adjustment of orientation of blades in order to change the load of the respective stages. Figure 1 further shows a bleed air collector 31 between the low pressure part 12 and the high pressure part 14. As the compressor, used in connection with the invention, is of common construction, it is not necessary to go into further detail.

According to the invention, several pressure sensing devices in form of dynamic pressure sensors, are mounted in the axial gaps between rotor blades 16 and stator blades 22 of stages of the high pressure part 14 of compressor 10. According to the most preferred embodiment, shown in Figures 1 and 2, these dynamic pressure sensors are mounted in the last three stages nearest the outlet 28 of the compressor 10. The dynamic pressure sensor associated to the last stage is indicated with 32a and the following dynamic pressure sensors (in the downstream direction of the compressor 10) with 32b and 32c. An inlet opening 35 of each sensor 32 is flush with an inner circumferential face 34 of a wall 36 defining said housing 24. In this way, each sensor 32 measures the pressure fluctuations of the respective stage, occurring at the inner circumferential face 34. Since the respective sensor 32 is located in the region of the axial gap between the rows of rotor blades 16 and stator blades 22, following the rotor blades downstream, each sensor is sensitive for the so called wake regions (Dellenregionen) being developed by the axial air flow at the downstream edge 38 of each rotary blade. These wake regions rotating with the respective rotary blade 16 are regions with lower density and flow velocity and with varying flow direction. Instead of directly mounting the respective sensor 32 in an opening 40 (borescope hole), it is also possible to use an elongated adaptor (not shown) which, with one of its ends, is mounted to the opening 40 and, at its other end, carries the sensor.

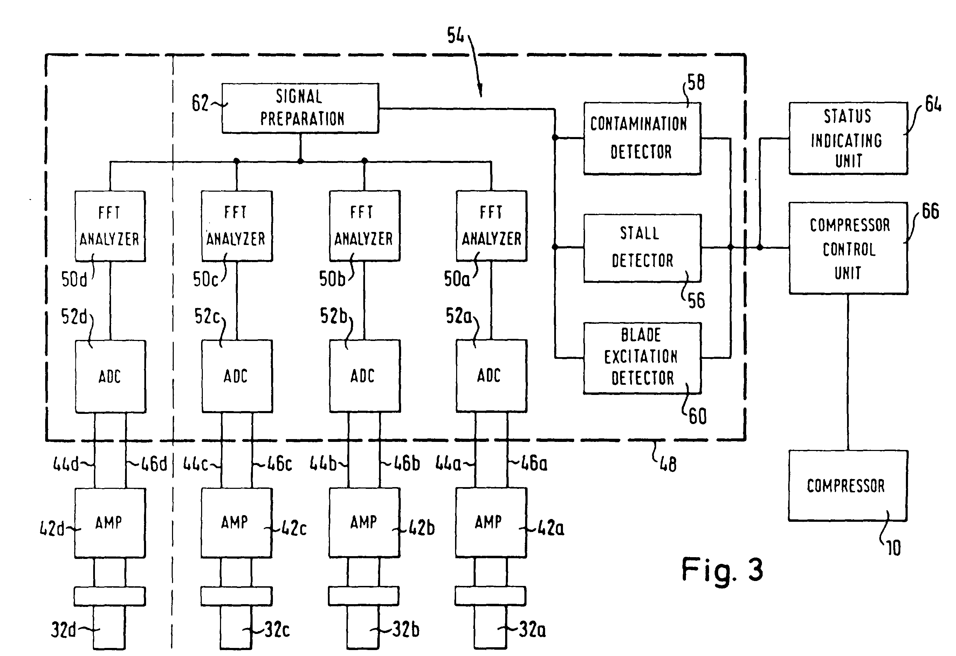

The illustrated location of the sensor 32 at the high- pressure axial end of the high pressure part 14 of the compressor 10 is preferred for a compressor operating at high speed (design speed). For lower speeds or for changing operational conditions, pressure sensors may be mounted in the axial gaps between rotor- and stator blades at the other axial end of the high pressure part 14 of compressor 10. Also, more than three sensors may be employed, as shown in Figure 3, with a fourth sensor 32d. The minimum is one sensor. Dynamic pressure sensors, preferably piezoelectric pressure sensors, are used because of their reliability, high temperature operability and sensitivity for high frequency pressure fluctuations up to 20 000 Hz (for example Kistler Pressure Sensor, Type 6031).

As shown in Figures 2 and 3, each sensor is provided with an amplifier 42, amplifying the respective sensor signal. These amplifiers 42 are connected via lines 44, 46 to an evaluation unit 48.

As shown in Figure 3, the evaluation unit 48 contains several Fast Fourier Transformer (FFT) analyzers 50 which respectively receive signals from the mentioned amplifier 42a-42d through analogue digital converters ADC (or multi- plexers) 52a-d which are connected between each of the respective amplifiers (AMP) 42a-d and FFT analyzers 50a-d.

The signals from the FFT analyzers 50a-d are transmitted to a computer unit 54 comprising several subunits, amongst them a stall detector 56, the functioning of which is described above. Besides this stall detector 56, further detectors for the status of the compressor may be installed, for example a contamination detector 58 for detecting fouling of the blades of the low pressure part 12 of compressor 10 and a blade excitation detector 60 for detecting pressure fluctuations which are able to induce high amplitude blade vibrations, which vibrations may damage the compressor. However, the stall detection according to the present invention, may also be performed independently of contamination detection and blade excitation detection.

In order to facilitate the computing of the frequency signals outputted from the FFT analyzers 50a-d, a unit 62 for signal preparation may be connected between the FFT analyzers 50a-d and the detectors 56, 58, 60. The unit 62 contains filter algorythms for handling and smoothing raw digital data as received from the FFT analyzers. A control program periodically switches the sensor signals of each of the individual dynamic pressure sensors 42a-d via the ADC-52a-d to the FFT analyzers 50a-d. The resulting frequency signals from the FFT analyzers, after smoothing via unit 62, are forwarded to said detectors 56, 58, 60 for comparison with respective reference patterns. If the comparison analysis indicates deviations beyond a predetermined allowable threshold of difference, the computed evaluation is transmitted to a status indicating unit 64 to indicate contamination or stall or blade excitation. Thus, the operation and status of compressor 10 can be monitored. Independent of this monitoring, it is further possible to use the computed evaluation for controlling purposes. A respective compressor control unit 66, connected to evaluation unit 48, is also shown in Figure 3 serving for controlling the compressor 10. In case of an unnormal status of the compressor, detected by one of the detectors 56, 58, 60, the compressor control unit 66 takes measures to avoid the risk of damaging compressor 10, for example by lowering the load (adjustment of orientation of blades by means of gear box 30 or by reducing the fuel injection rate of the combustion section to reduce the rotational speed). In some instances, the compressor control unit 66 may stop the compressor 10.

In the detectors 56, 58, 60, the smoothed frequency signal is evaluated, said frequency signal being indicative of the amplitudes of frequency components of the respective sensor signal in a respective frequency interval.

The stall detector 56 examines the frequency signals in a specific frequency region around a specific frequency, the so called characteristic frequency C, said frequency C being defined as the product of the present rotational speed n of rotor 20 and the blade number z of the rotor blades of the respective compressor stage:

$$C = n * z \qquad (1)$$

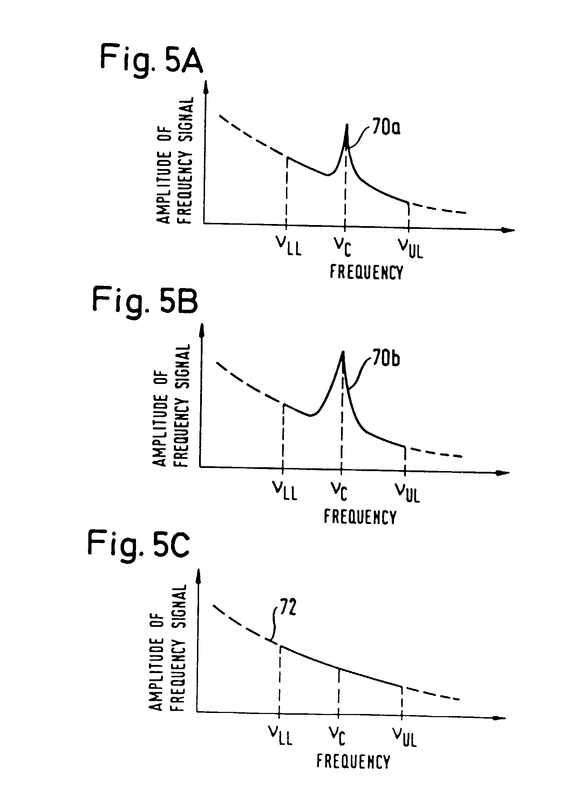

The frequency interval around C may have a width of less than 4000 Hz and preferably is 2000 Hz so that the upper limit UL may be C + 1000 Hz and the lower limit LL may be C - 1000 Hz (see Figure 5). In general, the blade number of rotor blades equals the blade number of stator blades within the same stage.

The wake regions rotating with rotor blades 16 of the respective compressor stage are passing the sensor 32 with the characteristic frequency C. Therefore, the frequency signal shows a respective characteristic peak 70 at C. It has been found, that the form of this characteristic peak is varying in a characteristic manner, if the load of the respective stage is increased starting from a normal stage load with peak 70a shown in Figure 5A. In a first phase, the peak becomes more characteristic as shown in Figure 5B (peak 70b). Both the height and the width of the characteristic peak increase as the load increases. This behavior is due to an increase of the wake regions (Dellenregionen) of the rotating blades, producing more characteristic pressure variations with the characteristic frequency at the location of the respective sensor 32.

However, with further increasing load, the peak height rapidly decreases and the peak is covered by the sloped background line 72. This behavior is due to the separation of parts of the boundary layers of the rotating blades 16. These separated parts of the boundary layers are moved radially outwards to the inner circumferential face 34 of the housing 24 under the influence of rotational forces exerted by the rotor 20. Here, the swirled separated regions are collected to form a relatively thick layer with stochastic fluctuations. This layer shields sensor 32 from the pressure fluctuations of the wake regions so that the characteristic peak measured by this sensor decreases rapidly and is covered by the background line 72. This separation phase may be called separated flow pre-stall phase since the separation of boundary layers and the collection of separated flow regions at the inner circumferential face 34 does not remarkably reduce the pressure ratio of the respective stage. Stall effects (rotating stall) with microscopic areas (bubbles) with blockage of flow in most cases will be observed when the characteristic peak has vanished (Figure 5c).

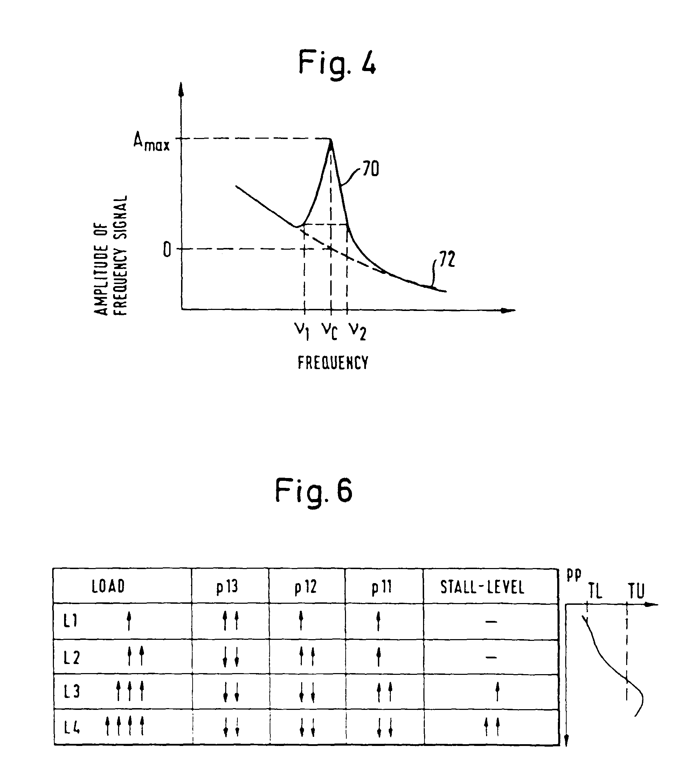

The observation of the characteristic peak therefore is a sensitive tool for monitoring and/or controlling of a compressor. One possibility of detecting changes of the form of the characteristic peak 70 would be a comparison of a predetermined peak form by means of pattern recognition. However, the evaluation is simplified, if not the complete peak form, but only one peak parameter is being observed and compared with limit values. This peak parameter may be defined as the peak height Amax above the background line 72 or the peak width 2 - 1 as shown in Fig. 4.

For a sensitive monitoring or controlling of the compressor, several characteristic peaks of different stages may be observed. In a most preferred embodiment, designed for monitoring and/or controlling of the compressor at design speed, the characteristic peaks of the last three stages of the high pressure part 14 are observed. In the present embodiment, the last stage is the 13th stage so that the respective peak parameter (especially peak height) is called p13. Consequently, the other two peak parameters are called p12 and p11. The table in Figure 6 indicates the behaviors of the peak parameters p13, p12 and p11 with increasing load, wherein the upwardly oriented arrows indicate increasing and the downwardly oriented arrows indicate decreasing load and peak height, respectively with the number of arrows indicating the respective strength. The column at the utmost right is called "stall level", said stall level (general peak parameter) being expressed by the following formula:

$$SL = \frac{a}{p13} + \frac{b}{p12} + c * p11 \qquad (2)$$

Experiments, performed with a compressor of a gas turbine of type LM 5000, show that in the last compressor stage separation is present at almost all times if the gas turbine is operated at its full speed operation mode under normal flow conditions. The load L2 of the respective stages in this case is indicated in line 2 of Figure 6. However, when lowering the load to a value L1 (Line 1 in Figure 6), the separation in stage 13 vanishes so that the characteristic peak develops, starting from Figure 5c to characteristic peak forms 70b and finally 70a. This behavior is indicated by two upwardly directed arrows on Figure 6. At the same time, the characteristic peak in stage 12 decreases from peak form 70b to peak form 70a (Figures 5B and 5A). The peak form 70a of the 11th stage remains unchanged. The above mentioned peak parameter SL according to equation 2 decreases with decreasing load from L2 to L1 since coefficient a is larger than coefficient b so that the contribution of the reciprocal value A/p13 exceeds the contribution of the reciprocal value B/p12.

On the other hand, when increasing the load from the normal value L2 to a value L3, the characteristic peak of stage 13 is unchanged (form according to Fig. 5c ); the characteristic peak of stage 12 develops from Fig. 5b to 5c and the characteristic peak of stage 11 develops from Fig. 5a to 5b. In dependence on parameters A, B, C, the peak parameter more or less sharply increases as shown in Figure 6, right hand side.

Upon further increasing load to value L4, characteristic peaks of stages 12 and 13 remain unchanged (Figure 5c), whereas the characteristic peak of stage 11 changes from Fig. 5b to Fig. 5c. Consequently, the peak parameter decreases.

In dependence upon the operation mode and compressor type used, the risk of compressor stall or compressor surge is negligeable with loads L1 and L2, comparatively low with load L3 and high with load L4. Therefore, a monitoring or controlling of the compressor to avoid the risk of stall or surge is possible by observing parameter SL and outputting an alarm signal if a certain upper threshold value TU is exceeded by the actual peak parameter SL. In order to avoid operation of the compressor in an uneconomic way below the maximum possible load value, a low threshold value TL could be defined by delivering an alarm signal if the actual peak parameter value SL becomes lower than TL. In both cases, evaluation unit 48, according to Figures 2 and 3, delivers the respective alarm signal to the status indicating unit 64 for informing the service staff appropriately.

The peak parameter SL may also be used for closed-loop- control of the compressor. If the measured peak parameter SL leaves the allowed region between the lower threshold TL and the upper threshold TU, the compressor control unit receives the respective control signal in order to change one or more operational parameters of the compressor to change the load of the compressor into the desired direction.

By using equation 2 accordingly, load L4 is avoided, meaning a separation effect in stage 11 is avoided, since then stall is expected to occur. The stability limit therefore lies between load L3 and load L4.

However, if the stability limit is only reached after the separation has started in stage 13 (load L4), the following equation (3) for the peak parameter is preferred:

$$PP = \frac{A}{p13} + \frac{B}{p12} + \frac{C}{p11} \qquad (3)$$

Since the characteristic peaks increase in importance from stage 13 to stage 11, coefficient C is chosen to be larger than coefficient B and coefficient B is chosen to be larger than coefficient A.

**Claims**

1. Process for monitoring of a compressor (10), said compressor comprising a rotor and a housing, said rotor being rotatably mounted within said housing for rotation about a rotational axis with variable or constant rotational speed, said compressor further comprising at least one compressor stage, each of said at least one stages comprising a row of rotor blades mounted on said rotor and being arranged one following the other in a circumferential direction with respect to said rotational axis and of a row of stator blades mounted on said housing and being arranged one following the other in a circumferential direction with respect to said rotational axis, said process comprising the following steps:

    a) measuring of pressure fluctuations within at least one of said compressor stages in the region of said housing by means of at least one pressure sensing device, each device delivering a sensor signal, respectively;
    b) deriving a frequency signal from each of said sensor signals, said frequency signal comprising a set of a plurality of frequency components of each of said respective sensor signals in a respective frequency interval wherein each frequency signal is indicative of the amplitudes of each of the frequency components of said respective sensor signals within the respective frequency interval;
    c) checking whether at least one frequency component in at least one of said frequency signals further comprises at least one characteristic peak in a region of a characteristic frequency assigned to one of said compressor stages, said characteristic frequency being defined as the product of said rotational speed and the blade number of the rotor blades of the respective compressor stage;
    d) determining at least one peak parameter indicative of the form of said characteristic peaks;
    e) generating a status change signal indicative of a change of operational status of said compressor in case of said peak parameter having a value lying beyond a determined value range.

2. Process according to claim 1, wherein said pressure sensing device is arranged at said housing between the rotor blades and the stator blades of one of said compressor stages.

3. Process according to claim 1, wherein said frequency signal is obtained by fast Fourier-transformation (FFT).

4. Process according to claim 1, wherein said frequency signal is obtained by fast Hartley transformation (FHT).

5. Process according to claim 1, wherein said pressure sensing device comprises a piezoelectric or piezoresistive pressure sensor.

6. Process according to claim 1, wherein said peak parameter is indicative of the peak height of the characteristic peak.

7. Process according to claim 6, wherein the peak height is defined as the ratio of a difference of a maximum value of the set of frequency components of said frequency signal in the region of said characteristic frequency and a mean value of the set of frequency components of said frequency signal within said frequency interval to said mean value.

8. Process according to claim 1, wherein said peak parameter is indicative of a peak width of said characteristic peak.

9. Process according to claim 8, wherein said peak width is defined as full width at half maximum.

10. Process according to claim 1, wherein said predetermined frequency interval has a width of less than 4000 Hz.

11. Process according to claim 10, wherein said predetermined frequency interval has a width of 2000 Hz.

12. Process according to claim 1, wherein steps c) and d) are performed for at least two different characteristic peaks with different characteristic frequencies assigned to at least two different compressor stages, respectively, and wherein said status change signal according to step e) is generated in case the peak parameter of at least one of said at least two characteristic peaks has a value lying beyond a determined value range assigned to the respective characteristic peak.

13. Process according to claim 12, wherein said at least two different characteristic peaks are part of the frequency signal derived from the sensor signal of a single pressure sensing device.

14. Process according to claim 12, wherein said at least two different characteristic peaks are part of respective frequency signals, each derived from respective sensor signals of at least two pressure sensing devices.

15. Process according to claim 1, wherein steps c) and d) are performed for at least two different characteristic peaks with characteristic frequencies assigned to at least two different compressor stages, respectively, and wherein said peak parameter is defined as a weighted sum of individual peak parameters of each of said at least two different characteristic peaks, said individual peak parameters being determined by the peak shape of the respective characteristic peak.

16. Process according to claim 15, wherein at least one of said individual peak parameters is defined by the reciprocal of the peak height of the respective characteristic peak.

17. Process according to claim 15, wherein at least one of said individual peak parameters is defined by the peak height of the respective peak parameter.

18. Process according to claim 15 for monitoring of an axial compressor, wherein said peak parameter is defined as a weighted sum of a reciprocal of the peak height of the characteristic peak assigned to a last pressure stage nearest to a high-pressure axial end of said axial compressor, the reciprocal of the peak height of the characteristic peak being assigned to the second to the last pressure stage and the peak height of the characteristic peak assigned to the third to the last pressure stage.

19. Process according to claim 15 for monitoring of an axial compressor, wherein said peak parameter is defined as a weighted sum of the reciprocals of the peak heights of the characteristic peaks assigned to a last pressure stage nearest to a high-pressure axial end of said axial compressor, to the second to the last pressure stage and to the third to the last pressure stage.

20. Process for controlling of a compressor, said compressor comprising a rotor and a housing, said rotor being rotatably mounted within said housing for rotation about a rotational axis with variable or constant rotational speed, said compressor further comprising at least one compressor stage, each of said at least one stages comprising a row of rotor blades mounted on said rotor and being arranged one following the other in a circumferential direction with respect to said rotational axis and of a row of stator blades mounted on said housing and being arranged one following the other in a circumferential direction with respect to said rotational axis, said process comprising the following steps:

a) measuring of pressure fluctuations within at least one of said compressor stages by means of at least one pressure sensing device, each device delivering a sensor signal, respectively; b) deriving a frequency signal from each of said sensor signals, said frequency signal comprising a set of a plurality of frequency components of each of said respective sensor signals in a respective frequency interval wherein each frequency signal is indicative of the amplitudes of each of the frequency components of said respective sensor signals within the respective frequency interval; c) checking whether at least one frequency component in at least one of said frequency signals further comprises at least one characteristic peak in a region of a characteristic frequency assigned to one of said compressor stages, said characteristic frequency being defined as the product of said rotational speed and the blade number of the rotor blades of the respective compressor stage;

d) determining at least one peak parameter indicative of the form of said characteristic peaks;

e) generating a status change signal indicative of a change of operational status of said compressor in case of said peak parameter having a value lying beyond a determined value range

f) using said status change signal for controlling said compressor.

21. Device for monitoring of a compressor said compressor comprising a rotor and a housing, said rotor being rotatably mounted within said housing for rotation about a rotational axis with variable or constant rotational speed, said compressor further comprising at least one compressor stage, each of said at least one stages comprising a row of rotor blades mounted on said rotor and being arranged one following the other in a circumferential direction with respect to said rotational axis and of a row of stator blades mounted on said housing and being arranged one following the other in a circumferential direction with respect to said rotational axis, said device comprising at least one pressure sensing device for measuring of pressure fluctuations within at least one of said compressor stages, each of said pressure sensing devices delivering a sensor signal, at least one transformation unit for deriving a frequency signal from each of said sensor signals, said frequency signal comprising a set of a plurality of frequency components of each of said respective sensor signals in a respective frequency interval wherein each frequency signal is indicative of the amplitudes of each of the frequency components of said respective sensor signals within the respective frequency interval, a status detection unit for generating a status change signal indicative of a change of operational status of said compressor, said status detection unit being adapted for checking whether at least one frequency component in at least one of said frequency signals further comprises at least one characteristic peak in a region of a characteristic frequency assigned to one of said compressor stages, said characteristic frequency being defined as the product of said rotational speed and the blade number of the rotor blades of the respective compressor stage, determining at least one peak parameter indicative of the form of said characteristic peaks, generating a status change signal indicative of a change of operational status of said compressor in case of said peak parameter having a value lying beyond a determined value range, and a status indicating unit receiving said status change signal and indicating the respective operational status of said compressor.

22. Device according to claim 21, wherein said pressure sensing device is arranged at said housing between the rotor blades and the stator blades of one of said compressor stages.

23. Device according to claim 21, wherein said pressure sensing device comprises a piezoelectric or piezo-resistive pressure sensor.

24. Device according to claim 21, wherein said transformation unit comprises a fast Fourier-transformation unit.

25. Device according to claim 21, wherein said transformation unit comprises a fast Hartley-transformation unit.

26. Device for controlling of a compressor said compressor comprising a rotor and a housing, said rotor being rotatably mounted within said housing for rotation about a rotational axis with variable or constant rotational speed, said compressor further comprising at least one compressor stage, each of said at least one stages comprising a row of rotor blades mounted on said rotor and being arranged one following the other in a circumferential direction with respect to said rotational axis and of a row of stator blades mounted on said housing and being arranged one following the other in a circumferential direction with respect to said rotational axis, said device comprising at least one pressure sensing device for measuring of pressure fluctuations within at least one of said compressor stages, each of said pressure sensing devices delivering a sensor signal, at least one transformation unit for deriving a frequency signal from each of said sensor signals, said frequency signal comprising a set of a plurality of frequency components of each of said respective sensor signals in a respective frequency interval wherein each frequency signal is indicative of the amplitudes of each of the frequency components of said respective sensor signals within the respective frequency interval, a status detection unit for generating a status change signal indicative of a change of operational status of said compressor, said status detection unit being adapted for checking whether at least one frequency component in at least one of said frequency signals further comprises at least one characteristic peak in a region of a characteristic frequency assigned to one of said compressor stages, said characteristic frequency being defined as the product of said rotational speed and the blade number of the rotor blades of the respective compressor stage, determining at least one peak parameter indicative of the form of said characteristic peaks, generating a status change signal indicative of a change of operational status of said compressor in case of said peak parameter having a value lying beyond a determined value range, said status detection unit delivering said status change signal to a controlling unit for operational control of said compressor.

27. Device according to claim 26, wherein said pressure sensing device is arranged at said housing between the rotor blades and the stator blades of one of said compressor stages.

28. Device according to claim 26, wherein said pressure sensing device comprises a piezoelectric or piezo-resistive pressure sensor.

29. Device according to claim 26, wherein said transformation unit comprises a fast Fourier-transformation unit.

30. Device according to claim 26, wherein said transformation unit comprises a fast Hartley-transformation unit.

**Patentansprüche**

1. Verfahren zum Überwachen eines Verdichters (10), wobei der Verdichter einen Rotor und ein Gehäuse umfaßt, wobei der Rotor drehbar innerhalb des Gehäuses zum Drehen um eine Drehachse mit variabler oder konstanter Drehgeschwindigkeit angeordnet ist, wobei der Verdichter ferner wenigstens eine Verdichterstufe umfaßt, wobei jede der wenigstens einen Verdichterstufe eine Reihe von am Rotor angebrachten und aufeinanderfolgend in einer Umfangsrichtung bezüglich der Drehachse angeordneten Rotorschaufeln und eine Reihe von am Gehäuse angebrachten und aufeinanderfolgend in einer Umfangsrichtung bezüglich der Drehachse angeordneten Statorschaufeln umfaßt, wobei das Verfahren die folgenden Schritte umfaßt:

a) Messen von Druckschwankungen innerhalb wenigstens einer der Verdichterstufen im Bereich des Gehäuses mittels wenigstens einer Drucksensiervorrichtung, wobei jede Vorrichtung jeweils ein Sensorsignal ausgibt;
b) Ableiten eines Frequenzsignals von jedem der Sensorsignale, wobei das Frequenzsignal eine Gruppe einer Mehrzahl von Frequenzkomponenten von jedem der jeweiligen Sensorsignale in einem jeweiligen Frequenzintervall umfaßt, wobei jedes Frequenzsignal die Amplituden von jeder der Frequenzkomponenten der jeweiligen Sensorsignale innerhalb des jeweiligen Frequenzintervalls angibt;
c) Überprüfen, ob wenigstens eine Frequenzkomponente in wenigstens einem der Frequenzsignale ferner wenigstens eine charakteristische Spitze in einem Bereich einer charakteristischen Frequenz umfaßt, welche einer der Verdichterstufen zugeordnet ist, wobei die charakteristische Frequenz als das Produkt der Drehzahl und der Schaufelanzahl der Rotorschaufeln der jeweiligen Verdichterstufe definiert ist;
d) Bestimmen wenigstens eines Spitzenparameters, welcher die Gestalt der charakteristischen Spitzen angibt;
e) Erzeugen eines Zustandsänderungssignals, welches die Änderung eines Betriebszustands des Verdichters in dem Falle angibt, in welchem der Spitzenparameter einen Wert besitzt, der außerhalb eines vorbestimmten Wertebereichs liegt.

2. Verfahren nach Anspruch 1, wobei die Drucksensiervorrichtung am Gehäuse zwischen den Rotorschaufeln und den Statorschaufeln von einer der Verdichterstufen angeordnet ist.

3. Verfahren nach Anspruch 1, wobei das Frequenzsignal durch eine schnelle Fourier-Transformation (FFT) erhalten wird.

4. Verfahren nach Anspruch 1, wobei das Frequenzsignal durch eine schnelle Hartley-Transformation (FHT) erhalten wird.

5. Verfahren nach Anspruch 1, wobei die Drucksensiervorrichtung einen piezoelektrischen oder piezoresistiven Drucksensor umfaßt.

6. Verfahren nach Anspruch 1, wobei der Spitzenparameter die Spitzenhöhe der charakteristischen Spitze angibt.

7. Verfahren nach Anspruch 6, wobei die Spitzenhöhe als das Verhältnis einer Differenz eines Maximalwerts der Gruppe von Frequenzkomponenten des Frequenzsignals im Bereich der charakteristischen Frequenz und eines Mittelwerts der Gruppe von Frequenzkomponenten des Frequenzsignals innerhalb des Frequenzintervalls zum Mittelwert definiert ist.

8. Verfahren nach Anspruch 1, wobei der Spitzenparameter eine Spitzenbreite der charakteristischen Spitze angibt.

9. Verfahren nach Anspruch 8, wobei die Spitzenbreite als volle Breite bei halbem Maximum (FWHM) definiert ist.

10. Verfahren nach Anspruch 1, wobei das vorbestimmte Frequenzintervall eine Breite von weniger als 4000 Hz besitzt.

11. Verfahren nach Anspruch 10, wobei das vorbestimmte Frequenzintervall eine Breite von 2000 Hz besitzt.

12. Verfahren nach Anspruch 1, wobei die Schritte c) und d) für wenigstens zwei verschiedene charakteristische Spitzen mit verschiedenen charakteristischen Frequenzen durchgeführt werden, welche jeweils wenigstens zwei verschiedenen Verdichterstufen zugeordnet sind, und wobei das Zustandsänderungssignal gemäß Schritt e) in dem Fall erzeugt wird, in welchem der Spitzenparameter von wenigstens einer der wenigstens zwei charakteristischen Spitzen einen Wert besitzt, welcher außerhalb eines der jeweiligen charakteristischen Spitze zugeordneten vorbestimmten Wertebereichs liegt.

13. Verfahren nach Anspruch 12, wobei die wenigstens zwei charakteristischen Spitzen ein Teil des Frequenzsignals sind, welches vom Sensorsignal einer einzelnen Drucksensiervorrichtung abgeleitet wird.

14. Verfahren nach Anspruch 12, wobei die wenigstens zwei verschiedenen charakteristischen Spitzen ein Teil jeweiliger Frequenzsignale sind, von denen jedes von den jeweiligen Sensorsignalen von wenigstens zwei Drucksensiervorrichtungen abgeleitet wird.

15. Verfahren nach Anspruch 1, wobei die Schritte c) und d) für wenigstens zwei verschiedene charakteristische Spitzen mit charakteristischen Frequenzen ausgeführt werden, welche jeweils wenigstens zwei verschiedenen Verdichterstufen zugeordnet sind, und wobei der Spitzenparameter als gewichtete Summe einzelner Spitzenparameter von jeder der wenigstens zwei verschiedenen charakteristischen Spitzen definiert ist, wobei die einzelnen Spitzenparameter durch die Spitzengestalt der jeweiligen charakteristischen Spitze bestimmt sind.

16. Verfahren nach Anspruch 15, wobei wenigstens einer der einzelnen Spitzenparameter durch den Kehrwert der Spitzenhöhe der jeweiligen charakteristischen Spitze definiert ist.

17. Verfahren nach Anspruch 15, wobei wenigstens einer der einzelnen Spitzenparameter durch die Spitzenhöhe des jeweiligen Spitzenparameters definiert ist.

18. Verfahren nach Anspruch 15 zum Überwachen eines Axialverdichters, wobei der Spitzenparameter definiert ist als gewichtete Summe eines Kehrwerts der Spitzenhöhe der charakteristischen Spitze, welche wenigstens einer einem axialen Hochdruckende des Axialverdichters nächsten Druckstufe zugeordnet ist, des Kehrwerts der Spitzenhöhe der charakteristischen Spitze, welche der zweitletzten Druckstufe zugeordnet ist, und der Spitzenhöhe der charakteristischen Spitze, welche der drittletzten Druckstufe zugeordnet ist.

19. Verfahren nach Anspruch 15 zum Überwachen eines Axialverdichters, wobei der Spitzenparameter als gewichtete Summe der Kehrwerte der Spitzenhöhen der charakteristischen Spitzen definiert ist, welche einer einem axialen Hochdruckende des Axialverdichters nächsten letzten Druckstufe der zweitletzten Druckstufe und der drittletzten Druckstufe zugeordnet sind.

20. Verfahren zum Steuern/Regeln eines Verdichters, wobei der Verdichter einen Rotor und ein Gehäuse umfaßt, wobei der Rotor drehbar innerhalb des Gehäuses zum Drehen um eine Drehachse mit variabler oder konstanter Drehgeschwindigkeit angeordnet ist, wobei der Verdichter ferner wenigstens eine Verdichterstufe umfaßt, wobei jede der wenigstens einen Stufe eine Reihe von am Rotor angebrachten und aufeinanderfolgend in einer Umfangsrichtung bezüglich der Drehachse angeordneten Rotorschaufeln und eine Reihe von am Gehäuse angebrachten und aufeinanderfolgend in einer Umfangsrichtung bezüglich der Drehachse angeordneten Statorschaufeln umfaßt, wobei das Verfahren die folgenden Schritte umfaßt:

  a) Messen von Druckschwankungen innerhalb wenigstens einer der Verdichterstufen mittels wenigstens einer Drucksensiervorrichtung, wobei jede Vorrichtung jeweils ein Sensorsignal ausgibt;
  b) Ableiten eines Frequenzsignals von jedem der Sensorsignale, wobei das Frequenzsignal eine Gruppe einer Mehrzahl von Frequenzkomponenten von jedem der jeweiligen Sensorsignale in einem jeweiligen Frequenzintervall umfaßt, wobei jedes Frequenzsignal die Amplituden von jeder der Frequenzkomponenten der jeweiligen Sensorsignale innerhalb des jeweiligen Frequenzintervalls angibt;
  c) Überprüfen, ob wenigstens eine Frequenzkomponente in wenigstens einem der Frequenzsignale ferner wenigstens eine charakteristische Spitze in einem Bereich einer charakteristischen Frequenz umfaßt, welche einer der Verdichterstufen zugeordnet ist, wobei die charakteristische Frequenz als das Produkt der Drehzahl und der Schaufelanzahl der Rotorschaufeln der jeweiligen Verdichterstufe definiert ist;
  d) Bestimmen wenigstens eines Spitzenparameters, welcher die Gestalt der charakteristischen Spitzen angibt;
  e) Erzeugen eines Zustandsänderungssignals, welches eine Änderung des Betriebszustandes des Verdichters in dem Fall angibt, in welchem der Spitzenparameter einen Wert aufweist, der außerhalb eines vorbestimmten Wertebereichs liegt,

f) Verwenden des Zustandsänderungssignals zum Steuern/Regeln des Verdichters.

21. Vorrichtung zum Überwachen eines Verdichters, wobei der Verdichter einen Rotor und ein Gehäuse umfaßt, wobei der Rotor drehbar innerhalb des Gehäuses zum Drehen um eine Drehachse mit variabler oder konstanter Drehgeschwindigkeit angeordnet ist, wobei der Verdichter ferner wenigstens eine Verdichterstufe umfaßt, wobei jede der wenigstens einen Verdichterstufe eine Reihe von am Rotor angebrachten und aufeinanderfolgend in einer Umfangsrichtung bezüglich der Drehachse angeordneten Rotorschaufeln und eine Reihe von am Gehäuse angebrachten und aufeinanderfolgend in einer Umfangsrichtung bezüglich der Drehachse angeordneten Statorschaufeln umfaßt, wobei die Vorrichtung umfaßt wenigstens eine Drucksensiervorrichtung zum Messen von Druckschwankungen innerhalb wenigstens einer der Verdichterstufen, wobei jede der Drucksensiervorrichtungen ein Sensorsignal ausgibt, wenigstens eine Transformationseinheit zum Ableiten eines Frequenzsignals von jedem der Sensorsignale, wobei das Frequenzsignal eine Gruppe einer Mehrzahl von Frequenzkomponenten von jedem der jeweiligen Sensorsignale in einem jeweiligen Frequenzintervall umfaßt, wobei jedes Frequenzsignal die Amplituden von jeder der Frequenzkomponenten der jeweiligen Sensorsignale innerhalb des jeweiligen Frequenzintervalls angibt, eine Zustandserfassungseinheit zum Erzeugen eines Zustandsänderungssignals, welches eine Änderung des Betriebszustands des Verdichters angibt, wobei die Zustandserfassungseinheit ausgelegt ist, zum Überprüfen, ob wenigstens eine Frequenzkomponente in wenigstens einem der Frequenzsignale ferner wenigstens eine charakteristische Spitze in einem Bereich einer charakteristischen Frequenz umfaßt, welche einer der Verdichterstufen zugeordnet ist, wobei die charakteristische Frequenz als das Produkt der Drehzahl und der Schaufelanzahl der Rotorschaufeln der jeweiligen Verdichterstufe definiert ist, zum Bestimmen von wenigstens einem Spitzenparameter, welcher die Gestalt der charakteristischen Spitzen angibt, zum Erzeugen eines Zustandsänderungssignals, welches eine Änderung eines Betriebszustands eines Verdichters in dem Fall angibt, in welchem der Spitzenparameter einen Wert besitzt, der außerhalb eines vorbestimmten Wertebereichs liegt, und eine Zustandsanzeigeeinheit, welche das Zustandsänderungssignal empfängt und den jeweiligen Betriebszustand des Verdichters anzeigt.

22. Vorrichtung nach Anspruch 21, wobei die Drucksensiervorrichtung am Gehäuse zwischen den Rotorschaufeln und den Statorschaufeln von einer der Verdichterstufen angeordnet ist.

23. Vorrichtung nach Anspruch 21, wobei die Drucksensiervorrichtung einen piezoelektrischen oder piezoresistiven Drucksensor umfaßt.

24. Vorrichtung nach Anspruch 21, wobei die Transformationseinheit eine schnelle Fourier-Transformationseinheit umfaßt.

25. Vorrichtung nach Anspruch 21, wobei die Transformationseinheit eine schnelle Hartley-Transformationseinheit umfaßt.

26. Vorrichtung zum Regeln/Steuern eines Verdichters, wobei der Verdichter einen Rotor und ein Gehäuse umfaßt, wobei der Rotor drehbar innerhalb des Gehäuses zum Drehen um eine Drehachse mit variabler oder konstanter Drehgeschwindigkeit angebracht ist, wobei der Verdichter ferner wenigstens eine Verdichterstufe umfaßt, wobei jede der wenigstens einen Verdichterstufe eine Reihe von am Rotor angebrachten und aufeinanderfolgend in einer Umfangsrichtung bezüglich der Drehachse angeordneten Rotorschaufeln und eine Reihe von am Gehäuse angebrachten und aufeinanderfolgend in einer Umfangsrichtung bezüglich der Drehachse angeordneten Statorschaufeln umfaßt, wobei die Vorrichtung umfaßt wenigstens eine Drucksensiervorrichtung zum Messen von Druckschwankungen innerhalb wenigstens einer der Verdichterstufen, wobei jede der Drucksensiervorrichtungen ein Sensorsignal ausgibt, wenigstens eine Transformationseinheit zum Ableiten eines Frequenzsignals von jedem der Sensorsignale, wobei das Frequenzsignal eine Gruppe einer Mehrzahl von Frequenzkomponenten von jedem der jeweiligen Sensorsignale in einem jeweiligen Frequenzintervall umfaßt, wobei jedes Frequenzsignal die Amplituden von jeder der Frequenzkomponenten der jeweiligen Sensorsignale innerhalb des jeweiligen Frequenzintervalls angibt, eine Zustandserfassungseinheit zum Erzeugen eines Zustandsänderungssignals, welches eine Änderung des Betriebszustands des Verdichters angibt, wobei die Zustandserfassungseinheit ausgelegt ist, zum Überprüfen, ob wenigstens eine Frequenzkomponente in wenigstens einem der Frequenzsignale ferner wenigstens eine charakteristische Spitze in einem Bereich einer charakteristischen Frequenz umfaßt, welche einer der Verdichterstufen zugeordnet ist, wobei die charakteristische Frequenz als das Produkt der Drehzahl und der Schaufelanzahl der Rotorschaufeln der jeweiligen Verdichterstufe definiert ist, zum Bestimmen von wenigstens einem Spitzenparameter, welcher die Gestalt der charakteristischen Spitzen angibt, zum Erzeugen eines Zustandsänderungssignals, welcher eine Änderung des Betriebszustands des Verdichters in dem Fall angibt, in welchem der Spitzenparameter einen Wert besitzt, der außerhalb eines vorbestimmten Wertebereichs liegt, wobei die Zustandsänderungseinheit das Zustandsänderungssignal an eine Steuer-/Regeleinheit abgibt, um den Betrieb des Verdichters zu steuern/regeln.

27. Vorrichtung nach Anspruch 26, wobei die Drucksensiervorrichtung am Gehäuse zwischen den Rotorschaufeln und den Statorschaufeln von einer der Verdichterstufen angeordnet ist.

28. Vorrichtung nach Anspruch 26, wobei die Drucksensiervorrichtung einen piezoelektrischen oder piezoresistiven Drucksensor umfaßt.

29. Vorrichtung nach Anspruch 26, wobei die Transformationseinheit eine schnelle Fourier-Transformationseinheit umfaßt.

30. Vorrichtung nach Anspruch 26, wobei die Transformationseinheit eine schnelle Hartley-Transformationseinheit umfaßt.

**Revendications**

1. Procédé pour surveiller un compresseur (10), ledit compresseur comprenant un rotor et un carter, ledit rotor étant monté de manière à pouvoir tourner à l'intérieur dudit carter en rotation autour d'un axe de rotation à une vitesse de rotation variable ou constante, ledit compresseur comprenant en outre au moins un étage de compresseur, chacun desdits au moins un étages de compresseur comprenant une rangée d'ailettes de rotor, montées sur ledit rotor et disposées successivement dans le sens circonférentiel par rapport au dit axe de rotation, et une rangée d'ailettes de stator montées sur ledit carter et disposées successivement dans le sens circonférentiel par rapport au dit axe de rotation, ledit procédé comprenant les étapes suivantes :

a) la mesure de fluctuations de pression dans au moins un desdits étages de compresseur dans la région dudit carter au moyen d'au moins un dispositif de mesure de pression, chaque dispositif fournissant respectivement un signal de capteur ;
b) l'obtention d'un signal de fréquence à partir de chacun desdits signaux de capteurs, ledit signal de fréquence comprenant un ensemble d'une pluralité de composantes de fréquences de chacun desdits signaux de capteurs correspondants dans un intervalle de fréquence correspondant, dans lequel chaque signal de fréquence indique les amplitudes de chacune des composantes de fréquences desdits signaux de capteur correspondants à l'intérieur de l'intervalle de fréquence correspondant ;
c) la vérification du fait qu'au moins une composante de fréquence dans au moins un desdits signaux de fréquence comprend en outre au moins un pic caractéristique dans une région de fréquence caractéristique attribuée à l'un desdits étages de compresseur, ladite fréquence caractéristique étant définie comme le produit de ladite vitesse de rotation et du nombre d'ailettes des ailettes de rotor de l'étage de compresseur correspondant ;
d) la détermination d'au moins un paramètre de pic indiquant la forme desdits pics caractéristiques ;
e) la production d'un signal de changement d'état indiquant un changement de l'état de fonctionnement dudit compresseur dans le cas où ledit paramètre de pic a une valeur située en dehors d'une plage de valeur prédéterminée.

2. Procédé selon la revendication 1, dans lequel ledit dispositif de mesure de pression est placé au niveau dudit carter, entre les ailettes de rotor et les ailettes de stator de l'un desdits étages du compresseur.

3. Procédé selon la revendication 1, dans lequel ledit signal de fréquence est obtenu par une transformation de Fourier rapide (TFR).

4. Procédé selon la revendication 1, dans lequel ledit signal de fréquence est obtenu par une transformation de Hartley rapide (THR).

5. Procédé selon la revendication 1, dans lequel ledit dispositif de mesure de pression comprend un capteur de pression piézoélectrique ou piézorésistif.

6. Procédé selon la revendication 1, dans lequel ledit paramètre de pic indique la hauteur de pic du pic caractéristique.

7. Procédé selon la revendication 6, dans lequel la hauteur de pic est définie comme étant le rapport de la différence entre la valeur maximale de l'ensemble de composantes de fréquence dudit signal de fréquence dans la région de la fréquence caractéristique, et la valeur moyenne de l'ensemble de composantes de fréquence dudit signal de fréquence dans ledit intervalle prédéterminé de fréquence, à ladite valeur moyenne.

**8.** Procédé selon la revendication 1, dans lequel ledit paramètre de pic indique une largeur de pic dudit pic caractéristique.

**9.** Procédé selon la revendication 8, dans lequel ladite largeur de pic est définie comme étant la largeur totale à la moitié du maximum.

**10.** Procédé selon la revendication 1, dans lequel ledit intervalle prédéterminé de fréquence a une largeur inférieure à 4 000 Hz.

**11.** Procédé selon la revendication 10, dans lequel ledit intervalle prédéterminé de fréquence a une largeur de 2 000 Hz.

**12.** Procédé selon la revendication 1, dans lequel les étapes c) et d) sont exécutées pour au moins deux pics caractéristiques différents ayant des fréquences caractéristiques différentes attribuées, respectivement, à au moins deux étages différents du compresseur, et dans lequel ledit signal de changement d'état selon l'étape e) est produit dans le cas où le paramètre de pic d'au moins un desdits au moins deux pics caractéristiques a une valeur située en dehors d'une plage prédéterminée de valeur attribuée au pic caractéristique correspondant.

**13.** Procédé selon la revendication 12, dans lequel lesdits au moins deux pics caractéristiques différents font partie du signal de fréquence obtenu à partir du signal de capteur d'un seul dispositif de mesure de pression.

**14.** Procédé selon la revendication 12, dans lequel lesdits au moins deux pics caractéristiques différents font partie de signaux de fréquence correspondants, obtenus chacun à partir de signaux de capteurs correspondants d'au moins deux dispositifs de mesure de pression.

**15.** Procédé selon la revendication 1, dans lequel les étapes c) et d) sont exécutées pour au moins deux pics caractéristiques différents ayant des fréquences caractéristiques attribuées, respectivement, à au moins deux étages différents du compresseur, et dans lequel ledit paramètre de pic est défini comme étant une somme pondérée de paramètres de pic individuels de chacun desdits au moins deux pics caractéristiques différents, lesdits paramètres de pic individuels étant déterminés par la forme de pic du pic caractéristique correspondant.

**16.** Procédé selon la revendication 15, dans lequel au moins un desdits paramètres de pic individuels est défini par l'inverse de la hauteur de pic du pic caractéristique correspondant.

**17.** Procédé selon la revendication 15, dans lequel au moins un desdits paramètres de pic individuels est défini par la hauteur de pic du paramètre de pic correspondant.

**18.** Procédé selon la revendication 15 pour la surveillance d'un compresseur axial, dans lequel ledit paramètre de pic est défini comme étant la somme pondérée de l'inverse de la hauteur de pic du pic caractéristique attribué au dernier étage de compression le plus proche de l'extrémité axiale haute pression dudit compresseur axial, de l'inverse de la hauteur de pic du pic caractéristique attribué à l'avant-dernier étage de compression et de la hauteur de pic du pic caractéristique attribué au troisième étage en partant du dernier étage de compression.

**19.** Procédé selon la revendication 15 pour la surveillance d'un compresseur axial, dans lequel ledit paramètre de pic est défini comme étant la somme pondérée des inverses des hauteurs de pic des pics caractéristiques attribués au dernier étage de compression le plus proche de l'extrémité axiale haute pression dudit compresseur axial, à l'avant-dernier étage de compression et au troisième étage en partant du dernier étage de compression.

**20.** Procédé de contrôle d'un compresseur, ledit compresseur comprenant un rotor et un carter, ledit rotor étant monté de manière à pouvoir tourner à l'intérieur dudit carter en rotation autour d'un axe de rotation à une vitesse de rotation variable ou constante, ledit compresseur comprenant en outre au moins un étage de compresseur, chacun desdits au moins un étages comprenant une rangée d'ailettes de rotor montées sur ledit rotor et disposées successivement dans le sens circonférentiel par rapport au dit axe de rotation, et une rangée d'ailettes de stator montées sur ledit carter et disposées successivement dans le sens circonférentiel par rapport au dit axe de rotation, ledit procédé comprenant les étapes suivantes :

a) la mesure de fluctuations de pression dans au moins un desdits étages de compresseur, au moyen d'au moins un dispositif de mesure de pression, chaque dispositif fournissant, respectivement, un signal de capteur ;
b) l'obtention d'un signal de fréquence à partir de chacun desdits signaux de capteurs, ledit signal de fréquence comprenant un ensemble d'une pluralité de composantes de fréquences de chacun desdits signaux de capteur correspondants dans un intervalle de fréquence correspondant, dans lequel chaque signal de fréquence indique les amplitudes de chacune des composantes de fréquence desdits signaux de capteur correspondants à l'intérieur de l'intervalle de fréquence correspondant ;

c) la vérification du fait qu'au moins une composante de fréquence dans au moins un desdits signaux de fréquence comprend en outre au moins un pic caractéristique dans une région de fréquence caractéristique attribuée à l'un desdits étages de compresseur, ladite fréquence caractéristique étant définie comme le produit de ladite vitesse de rotation et du nombre d'ailettes des ailettes de rotor de l'étage de compresseur correspondant ;

d) la détermination d'au moins un paramètre de pic indiquant la forme desdits pics caractéristiques ;

e) la production d'un signal de changement d'état indiquant un changement de l'état de fonctionnement dudit compresseur dans le cas où ledit paramètre de pic a une valeur située en dehors d'une plage de valeur prédéterminée ;

f) l'utilisation dudit signal de changement d'état pour contrôler ledit compresseur.

21. Dispositif de surveillance d'un compresseur, ledit compresseur comprenant un rotor et un carter, ledit rotor étant monté de manière à pouvoir tourner à l'intérieur dudit carter en rotation autour d'un axe de rotation à une vitesse de rotation variable ou constante, ledit compresseur comprenant en outre au moins un étage de compresseur, chacun desdits au moins un étages comprenant une rangée d'ailettes de rotor montées sur ledit rotor et disposées successivement dans le sens circonférentiel par rapport au dit axe de rotation, et une rangée d'ailettes de stator montées sur ledit carter et disposées successivement dans le sens circonférentiel par rapport au dit axe de rotation, ledit dispositif comprenant au moins un dispositif de mesure de pression pour la mesure de fluctuations de pression dans au moins un desdits étages de compresseur, chacun desdits dispositifs de mesure de pression fournissant un signal de capteur, au moins une unité de transformation pour obtenir un signal de fréquence à partir de chacun desdits signaux de capteur, ledit signal de fréquence comprenant un ensemble d'une pluralité de composantes de fréquences de chacun desdits signaux de capteur correspondants dans un intervalle de fréquence correspondant, dans lequel chaque signal de fréquence indique les amplitudes de chacune des composantes de fréquence desdits signaux de capteur correspondants à l'intérieur de l'intervalle de fréquence correspondant, une unité de détection d'état pour la production d'un signal de changement d'état indiquant un changement de l'état de fonctionnement dudit compresseur, ladite unité de détection d'état étant destinée à vérifier si au moins une composante de fréquence dans au moins un desdits signaux de fréquence comprend en outre au moins un pic caractéristique dans une région de fréquence caractéristique attribuée à l'un desdits étages de compresseur, ladite fréquence caractéristique étant définie comme le produit de ladite vitesse de rotation et du nombre d'ailettes des ailettes de rotor de l'étage de compresseur correspondant, à déterminer au moins un paramètre de pic indiquant la forme desdits pics caractéristiques, à produire un signal de changement d'état indiquant un changement de l'état de fonctionnement dudit compresseur dans le cas où ledit paramètre de pic a une valeur située en dehors d'une plage de valeur prédéterminée, et une unité indicatrice d'état recevant ledit signal de changement d'état et indiquant l'état de fonctionnement correspondant dudit compresseur.

22. Dispositif selon la revendication 21, dans lequel ledit dispositif de mesure de pression est placé au niveau dudit carter entre les ailettes de rotor et les ailettes de stator de l'un desdits étages du compresseur.

23. Dispositif selon la revendication 21, dans lequel ledit dispositif de mesure de pression comprend un capteur de pression piézoélectrique ou piézorésistif.

24. Dispositif selon la revendication 21, dans lequel ladite unité de transformation comprend une unité de transformation de Fourier rapide.

25. Dispositif selon la revendication 21, dans lequel ladite unité de transformation comprend une unité de transformation de Hartley rapide.

26. Dispositif pour contrôler un compresseur, ledit compresseur comprenant un rotor et un carter, ledit rotor étant monté de manière à pouvoir tourner à l'intérieur dudit carter en rotation autour d'un axe de rotation à une vitesse de rotation variable ou constante, ledit compresseur comprenant en outre au moins un étage de compresseur, chacun desdits au moins un étages comprenant une rangée d'ailettes de rotor montées sur ledit rotor et disposées successivement dans le sens circonférentiel par rapport au dit axe de rotation, et une rangée d'ailettes de stator montées sur ledit carter et disposées successivement dans le sens circonférentiel par rapport au dit axe de rotation, ledit dispositif comprenant au moins un dispositif de mesure de pression pour la mesure de fluctuations de pression dans au moins un desdits étages de compresseur, chacun desdits dispositifs de mesure de pression fournissant un signal de capteur, au moins une unité de transformation pour obtenir un signal de fréquence à partir de chacun desdits signaux de capteur, ledit signal de fréquence comprenant un ensemble d'une pluralité de composantes de fréquences de chacun desdits signaux de capteur correspondants dans un intervalle de fréquences correspondant, dans lequel chaque signal de fréquence indique les amplitudes de chacune des composantes de fréquences desdits signaux de capteur correspondants à l'intérieur de l'intervalle de fréquence correspondant, une unité de détection d'état pour produire un signal de changement d'état indiquant un changement de l'état de fonctionnement dudit compresseur, ladite unité de détection d'état étant destinée à vérifier si au moins une composante de fréquence dans au moins un desdits signaux de fréquence comprend en outre au moins un pic caractéristique dans une région de fréquence caractéristique attribuée à l'un desdits étages de compresseur, ladite fréquence caractéristique étant définie comme le produit de ladite vitesse de rotation et du nombre d'ailettes des ailettes de rotor de l'étage de compresseur correspondant, à déterminer au moins un paramètre de pic indiquant la forme desdits pics caractéristiques, à produire un signal de changement d'état indiquant un changement de l'état de fonctionnement dudit compresseur dans le cas où ledit paramètre de pic a une valeur située en dehors d'une plage de valeur prédéterminée, ladite unité de détection d'état fournissant ledit signal de changement d'état à une unité de contrôle pour le contrôle du fonctionnement dudit compresseur.

27. Dispositif selon la revendication 26, dans lequel ledit dispositif de mesure de pression est placé au niveau dudit carter entre les ailettes de rotor et les ailettes de stator de l'un desdits étages du compresseur.

28. Dispositif selon la revendication 26, dans lequel ledit dispositif de mesure de pression comprend un capteur de pression piézoélectrique ou piézorésistif.

29. Dispositif selon la revendication 26, dans lequel ladite unité de transformation comprend une unité de transformation de Fourier rapide.

30. Dispositif selon la revendication 26, dans lequel ladite unité de transformation comprend une unité de transformation de Hartley rapide.

Fig. 1

# Fig. 2

STATUS INDICATING UNIT — 64

EVALUTION UNIT — 48

COMPRESSOR CONTROL UNIT — 66

COMPRESSOR — 10

44d

46d

44c 46c

44b 46b

44a 46a

32c 42c 36

32b 42b 34 24

32a 42a

40

35

16c 22c 16b 22b 16a 22a

28

38

18

EP 0 654 161 B1

Fig. 3

# Fig. 4

# Fig. 6

| LOAD | p13 | p12 | p11 | STALL-LEVEL |
|------|-----|-----|-----|-------------|
| L1 ↑ | ↑↑ | ↑ | ↑ | — |
| L2 ↑↑ | ↓↓ | ↑↑ | ↑ | — |
| L3 ↑↑↑ | ↓↓ | ↓↓ | ↑↑ | ↑ |
| L4 ↑↑↑↑ | ↓↓ | ↓↓ | ↓↓ | ↑↑ |

# Fig. 5A

# Fig. 5B

# Fig. 5C